# DEMANDE DE BREVET EUROPEEN

(11) **EP 1 477 884 A2**
(43) Date de publication de la demande: **17.11.2004**
(21) Numéro de dépôt: 04290594.3
(22) Date de dépôt: 23.12.1999
(51) Int. Cl.: G06F 1/00

(54) **Circuit integré intelligent**

(30) Priorité: 28.12.1998 FR 9816485
(62) Demande divisionnaire de: 99961162.7
(71) Demandeur: CP8 Technologies, 78431 Louveciennes (FR)
(72) Inventeur: Gressus, Yvon, 78340 Les Clayes sous Bois (FR); Siegelin, Christoph, 75015 Paris (FR); Ugon, Michel, 78310 Maurepas (FR)
(74) Mandataire: Debay, Yves

(57) **Abrégé**

La présente invention concerne circuit intégré intelligent. Ce circuit intégré intelligent est caractérisé en ce qu'il possède un processeur principal (1) et un système d'exploitation exécutant un programme principal (P1) pour constituer un processus principal réalisant des tâches, au moins un processeur secondaire (2) capable d'exécuter concurremment au moins un programme secondaire (P2) pour constituer au moins un processus réalisant des tâches, des circuits d'alimentation (6) communs entre les processeurs et des moyens permettant de s'assurer que le ou les processus secondaires d'énergie similaire et de signature de fonctionnement différente, s'effectuent concurremment avec le processus principal en induisant dans les circuits d'alimentation, de façon continue ou intermittente, des perturbations énergétiques qui se superposent à celle du processus principal pour réaliser un brouillage continu ou intermittent.

## Description

Il est connu que les microprocesseurs ou les microcalculateurs ou des circuits intégrés intelligents exécutent séquentiellement des instructions d'un programme enregistré dans une mémoire, en synchronisme avec un ou plusieurs signaux de cadencement référencés par rapport à des signaux d'horloge fournis au microprocesseur ou au microcalculateur ou au circuit intégré soit en interne soit en externe. Par circuit intégré intelligent, on comprend un circuit intégré comportant des circuits spécifiques et limités à l'exécution d'un nombre restreint d'instructions ou de fonctionnalités pour lesquels ils ont été spécifiquement développés.

Il s'est avéré possible de tracer les différentes phases de cette exécution de programme en fonction du temps puisque l'exécution des instructions s'effectue séquentiellement suivant un processus prédéterminé par ce programme, en général en synchronisme avec les signaux d'horloge qui cadencent régulièrement le processeur. En effet, tout programme se traduit par une suite d'instructions qui doivent être exécutées successivement dans un ordre connu à l'avance, les instants de début et de fin de chaque instruction étant parfaitement connus car elle s'exécute suivant un processus prédéterminé qui, pour des moyens d'analyse sophistiqués, possède ce que l'on peut appeler une " signature " reconnaissable. Il est connu que cette signature du processus peut, par exemple, être obtenue à partir des signaux de mesure des énergies consommées par les différents circuits électriques qui sont mis en oeuvre par l'instruction ou la séquence d'instructions exécutée. Il est donc en principe possible de connaître la nature de la séquence d'instructions qui s'exécute à un moment donné dans l'unité de traitement du processeur puisque le programme qui se déroule est constitué de cette suite prédéterminée d'instructions dont la signature est connue.

On peut arriver par de tels moyens à déterminer quelle est l'instruction particulière qui s'exécute ainsi que les données utilisées par cette instruction.

Cette possibilité de pouvoir observer les détails de déroulement d'un programme dans un microprocesseur ou un microcalculateur est un inconvénient majeur lorsque ce microprocesseur ou microcalculateur est utilisé dans des applications de haute sécurité. En effet, un individu mal intentionné pourrait ainsi connaître les états successifs dans lesquels se trouve le processeur et tirer parti de ces informations pour connaître certains résultats sensibles de traitement interne.

On peut imaginer, par exemple, qu'une action donnée puisse se produire à des instants différents en fonction du résultat d'une opération sécuritaire déterminée, tel que le test d'une information confidentielle interne ou le déchiffrement d'un message, ou encore le contrôle d'intégrité de certaines informations. Selon l'instant considéré, on pourrait, par exemple agir sur le processeur, ou obtenir la valeur de certains registres par investigation physique, afin d'obtenir des renseignements sur le résultat ou sur le contenu confidentiel de l'information, et ceci même dans le cas de calculs cryptographiques sur la clé secrète de chiffrement utilisée.

Il est connu des dispositifs qui apportent un premier perfectionnent aux microcalculateurs sécurisés en les dotant de circuits qui génèrent des impulsions d'horloge aléatoires. De cette manière, les investigations rendent particulièrement difficile l'observation des événements, puisque leur synchronisation devient vite impraticable et la survenance d'un événement devient difficilement prévisible.

Cependant, ce type de solution présente de nombreux inconvénients.

Tout d'abord, la conception de tels circuits est particulièrement délicate et fastidieuse car il n'est pas possible de simuler un fonctionnement aléatoire dans la totalité d'un circuit aussi complexe qu'un microcalculateur et encore plus difficile de tester ces circuits en fin de fabrication dans leur comportement brouillé. Une suite aléatoire d'impulsions d'horloge est, en effet, très difficile à simuler pour la mise au point des circuits, mais il est encore plus difficile de maîtriser tous les comportements de l'ensemble des circuits logiques du processeur, notamment pendant les périodes de commutation des signaux sur les bus internes et dans les registres.

Il est aussi connu un autre dispositif qui introduit une nouvelle architecture basée sur l'utilisation d'une mémoire trompe-l'oeil utilisée ou non par le microprocesseur de façon totalement désynchronisée par rapport au milieu extérieur. De cette manière, l'observation des événements et des signatures est rendue particulièrement difficile.

Cependant, l'utilisation d'une horloge aléatoire ou d'une mémoire trompe-l'oeil, même si elles apportent des perfectionnements intéressants, ne modifie pas le comportement de base du microprocesseur qui est toujours séquentiel, même si les instructions qui se succèdent font partie de processus différents. Il reste donc théoriquement possible de " filtrer" les mauvaises instructions pour ne conserver que les bonnes et ainsi tirer parti des informations émanant du microprocesseur.

Un autre inconvénient réside dans le fait que l'on doit sauvegarder les contextes d'exécution des programmes interrompus par des séquences trompe-l'oeil et les rétablir, ce qui nécessite pour cette sauvegarde des ressources mémoires non négligeables.

C'est un des buts de l'invention que de doter le circuit intégré intelligent de moyens interdisant le type d'investigation décrit plus haut, et plus généralement d'empêcher toute interprétation des signaux provenant du processeur ou de l'unité de traitement principale. Ce type de circuit est appelé "MUMIC" (Multi Untraceable MICrocomputer).

Ce but est atteint par le fait que le circuit intégré intelligent possède un processeur principal et un système d'exploitation exécutant un programme principal pour constituer un processus principal réalisant des tâches, au moins un processeur secondaire capable d'exécuter concurremment au moins un programme secondaire pour constituer au moins un processus réalisant des tâches, des circuits d'alimentation communs entre les processeurs et des moyens permettant de s'assurer que le ou les processus secondaires d'énergie similaire et de signature de fonctionnement différente, s'effectuent concurremment avec le processus principal en induisant dans les circuits d'alimentation, de façon continue ou intermittente, des perturbations énergétiques qui se superposent à celles du processus principal pour réaliser un brouillage continu ou intermittent.

Selon une autre particularité, les processeurs principaux ou secondaires sont chacun un microprocesseur ou microcalculateur sécurisé.

Selon une autre particularité, l'activation de ces moyens est déclenchée par le système d'exploitation du processeur principal du circuit intégré intelligent, de telle sorte que la sécurité supplémentaire créée par les moyens ci-dessus ne dépend que d'une décision résultant de l'exécution par le processeur principal du système d'exploitation situé dans un endroit du circuit intégré inaccessible de l'extérieur.

Selon une autre particularité, le circuit intégré intelligent possède une mémoire principale, dédiée au processeur principal, contenant le système d'exploitation dans au moins une partie de celle-ci inaccessible de l'extérieur et accessible par au moins un des deux processeurs et une mémoire secondaire respectivement dédiée au processeur secondaire.

Selon une autre particularité, le circuit intégré intelligent possède au moins un bus de communication entre les processeurs, leurs mémoires respectives et un circuit d'entrée sortie.

Selon une autre particularité, le circuit intégré intelligent est réalisé à l'aide de circuits logiques dispersés sur le ou les substrats de façon que l'implantation physique des deux processeurs soit réalisée sans blocs fonctionnels facilement repérables, par exemple par imbrication physique mais avec une organisation logique séparée.

Selon une autre particularité, le processeur secondaire exécute des tâches du processus secondaire qui minimisent ou annulent les signatures de fonctionnement du processeur principal.

Selon une autre particularité, le processeur secondaire exécute des tâches du processus secondaire corrélées à celles du processus principal exécuté par le processeur principal de façon telle que les résultats intermédiaires de traitement n'apparaissent jamais au cours du processus.

Selon une autre particularité, le programme secondaire utilise un espace de travail plus petit que celui du programme principal.

Un second but de l'invention est de faire en sorte que le processus principal ne puisse fonctionner que si le processus secondaire est opérationnel.

Ce second but est atteint par le fait que le circuit intégré intelligent possède des moyens de communication entre le processeur principal et le processeur secondaire.

Selon une autre particularité, les moyens de communication entre les deux processeurs permettent au processeur principal de savoir si le processeur secondaire est opérationnel ou non.

Selon une autre particularité, les moyens de communication entre les deux processeurs permettent au processeur principal de réaliser une authentification du processeur secondaire.

Selon une autre particularité, le test d'authentification ou de fonctionnement du processeur secondaire est réalisé en cours de traitement par le processeur principal.

Selon une autre particularité, le moyen d'activation du processeur secondaire est commandé soit par le processeur principal et son programme principal, soit par un système d'interruption, soit par un compteur de temps, soit encore par une combinaison des trois.

Un troisième but de l'invention est de faire en sorte que le processus secondaire mette en oeuvre un programme qui est totalement différent du programme principal.

Ce troisième but est atteint par le fait que le processeur secondaire exécute des tâches du processus secondaire sans corrélation avec celles du processus principal exécutées par le processeur principal.

Selon une autre particularité, le processeur secondaire exécute des tâches du processus secondaire qui minimisent ou annulent les signatures de fonctionnement du processeur principal.

Un quatrième but de l'invention est que le programme secondaire utilise un programme dont la signature induit des effets opposés à ceux émanant du processeur principal.

Ce quatrième but est atteint par le fait que le programme secondaire met en oeuvre un processus corrélé au processus principal, de telle façon que la combinaison des deux processus fournisse une signature de fonctionnement du processeur secondaire qui dissimule celle du processeur principal.

Selon une autre particularité, le processeur secondaire exécute des tâches corrélées à celles du processeur principal de façon telle que les résultats intermédiaires de traitement n'apparaissent jamais au cours du processus.

Un cinquième but de l'invention est de réaliser une architecture originale en utilisant des circuits validés, sans avoir besoin de créer une nouvelle technologie de semi-conducteurs ou de nouveaux procédés de fabrication.

Ce cinquième but est atteint par le fait que le processeur secondaire peut se substituer au processeur principal et réciproquement.

Selon une autre particularité, le processeur secondaire exécute des tâches corrélées à celles du processeur principal par synchronisation des processus et comparaison de valeurs de deux données provenant chacune du processeur respectif exécutant son programme respectif.

Selon une autre particularité, le processeur secondaire exécute des tâches corrélées à celles du processeur principal par déduction logique du programme secondaire à partir du programme principal.

Selon une autre particularité, le circuit intégré intelligent comporte au moins deux processeurs et chacun des processeurs possède un bus respectif auxquels sont reliées les mémoires vives, mortes pour chaque processeur et non volatile pour le processeur principal.

Selon une autre particularité, le circuit intégré intelligent comporte une pluralité de processeurs dont chacun est relié à un seul et même bus de communication multiplexé entre les processeurs et un ensemble de mémoire vive, morte et non volatile relié à ce bus, les conflits d'accès à ce bus commun étant gérés par un circuit d'arbitrage.

Selon une autre particularité, le processeur secondaire exécute successivement et dans n'importe quel ordre, soit des programmes corrélés, soit des programmes sans corrélation avec ceux exécutés par le processeur principal.

D'autres particularités et avantages de l'invention apparaîtront plus clairement à la lumière de la description qui va suivre, faite en référence aux dessins annexés dans lesquels :
- la figure 1 représente un schéma logique d'un mode de réalisation du circuit intégré de l'invention à deux processeurs avec chacun leur bus ;
- la figure 2a représente un exemple de réalisation d'un circuit de communication entre deux processeurs du circuit ;
- la figure 2b représente la structure d'une trame utilisée dans la communication entre les deux processeurs du circuit ;
- la figure 3 représente un schéma d'un mode de réalisation du circuit intégré de l'invention à deux processeurs avec un seul bus ;
- la figure 4 représente un schéma d'un mode de réalisation d'une protection par synchronisation et comparaison de deux valeurs de données provenant de chaque processeur ;
- la figure 5 représente un exemple de réalisation d'une mémoire double ports accessible sur chaque port par un processeur du circuit ;
- la figure 6 représente schématiquement un mode d'implantation physique des éléments du circuit selon l'invention ;
- la figure 7 représente le mode d'implantation traditionnel des éléments d'un circuit à deux processeurs.

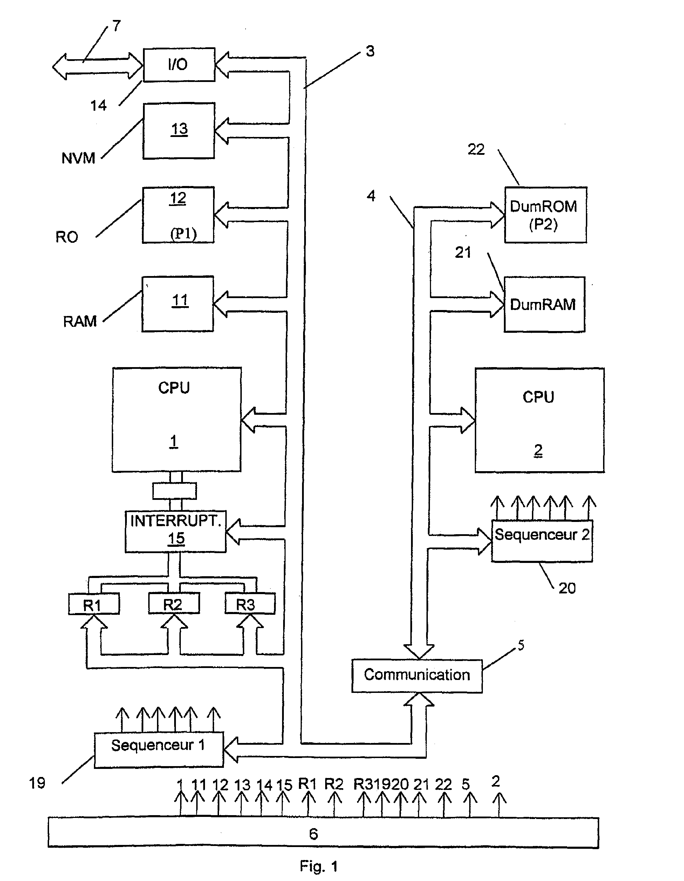

Le circuit intégré intelligent objet de l'invention est appelé MUMIC (Multi Untraceable MICrocomputer) et une première variante de sa constitution logique va être explicitée en liaison avec la figure 1. Cette constitution logique n'est pas représentative de la constitution physique ou de l'implantation topologique, comme on le verra par la suite. Ce circuit intégré intelligent est constitué d'un processeur principal (1) et d'un processeur secondaire (2), chacun des processeurs étant connecté par son bus de communication (Adresses, Données et commandes) respectif (3,4) à des mémoires respectives (12,13,22) contenant le programme principal (P1) et le programme secondaire (P2) à exécuter par chacun des processeurs respectifs principal (1) et secondaire (2), et des registres de travail, tels que, par exemple, des mémoires volatiles RAM (11,21). Les mémoires reliées au processeur secondaire sont des mémoires " trompe l'oeil " vive (DumRAM 21) et morte (DumROM 22) qui permettent au processeur secondaire (2) d'exécuter des tâches se superposant à celles du processeur principal (1). Le système d'exploitation du processeur principal est, par exemple, contenu dans une partie inaccessible de l'extérieur de la mémoire morte (12), mais accessible par au moins un des deux processeurs. Chaque processeur (1, 2) possède son propre séquenceur (19, respectivement 20). Le circuit intégré selon l'invention comporte également un circuit d'entrée sortie (14) relié, d'une part au bus unique ou au bus du processeur principal lorsque le circuit est réalisé selon une variante à plusieurs bus et d'autre part, par exemple par des contacts ou un dispositif de liaison sans contact au monde extérieur pour recevoir les signaux d'un terminal. Un ensemble de registres (R1, R2, R3) et un circuit d'interruption (15) peuvent être rajoutés au processeur qui en a besoin pour la mise en oeuvre d'une des variantes de fonctionnement correspondant à une variante de réalisation décrite ci-après. Les trois éléments (R1, R2, R3) sont reliés à un circuit de génération d'interruption (15) lequel est branché sur les entrées d'interruption du processeur (en l'occurrence le principal).

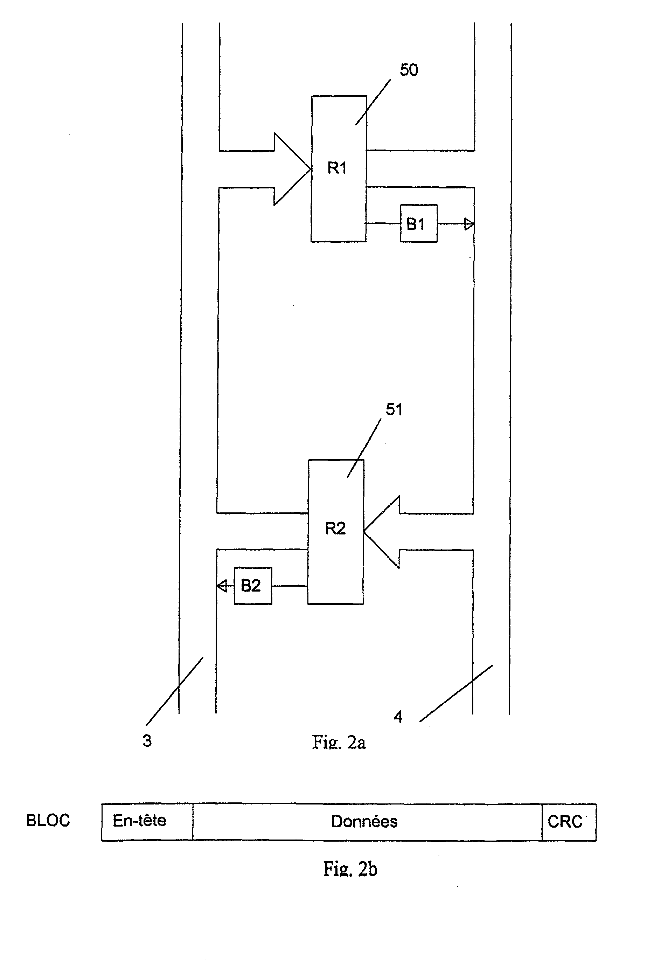

Le système d'exploitation du processeur principal (1) est unique dans le cas d'une variante processeur principal maître processeur secondaire esclave et se trouve disposé dans la mémoire morte (12) accessible par le processeur principal. Lorsque cela est nécessaire pour les variantes où les processeurs peuvent avoir leurs rôles échangés, un deuxième système d'exploitation ou le même système d'exploitation peut être rendu accessible au processeur secondaire, par exemple par un échange de jeton de droit d'accès et un contrôle de ce droit d'accès avant que le processeur ne passe la main à l'autre. De même un circuit d'interruption peut être rajouté à chaque processeur qui en a besoin pour le rôle qu'il doit jouer, en particulier dans le cas de l'échange de rôle ou dans la variante de réalisation de la figure 2a.

Le programme principal (P1) est contenu dans la mémoire non volatile (13) et l'utilisation des mémoires trompe-l'oeil correspond à celle décrite dans la demande de brevet français publiée sous le numéro FR 2 765 361, en tenant compte du fait qu'il peut y avoir simultanéité d'exécution entre au moins deux processeurs du circuit intégré intelligent. Dans un tel cas, les deux types de mémoires (trompe l'oeil et les autres) sont exploités pendant les mêmes périodes, ceci même si le bus est en réalité multiplexé.

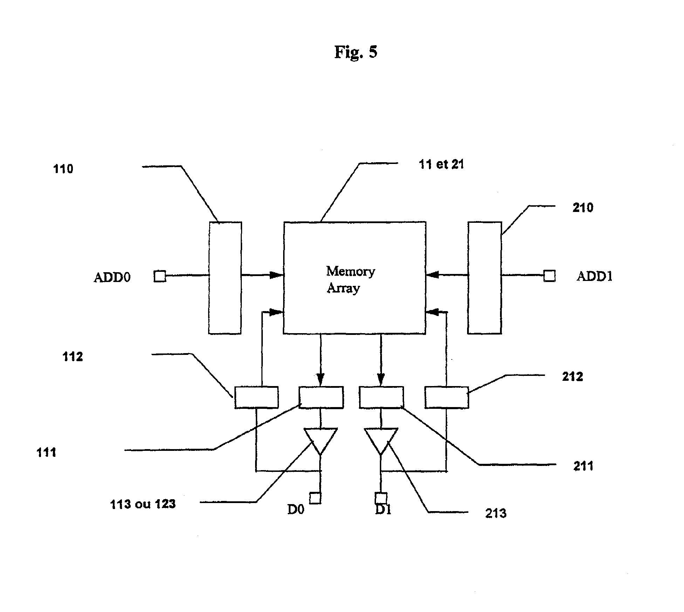

Le circuit intégré comporte également une interface d'entrée sortie reliée à au moins un bus du circuit intégré, cette interface pouvant être du type soit parallèle/parallèle, soit parallèle/série. Dans une variante de réalisation, la mémoire vive de travail RAM (11) du processeur principal (1) peut être fusionnée avec la mémoire vive trompe-l'oeil (21 DumRAM) du processeur secondaire (2) pour former une seule et même mémoire double ports comme représenté figure 5. Ces mémoires double ports, vive (11-21)) utilisent une paire de registres d'adresse (110, 210), pour recevoir les signaux d'adresse (ADD0, ADD1) et permettre l'accès par le processeur principal (1), respectivement secondaire (2). Ces mémoires double ports, vive (11-21), utilisent également une première paire (111, 211) de registres de données pour permettre l'accès en lecture de donnée par le processeur principal (1), respectivement secondaire (2). Les sorties des registres de donnée de lecture sont reliées à des amplificateurs (113, 213) qui délivrent les signaux de données (D0, D1). Enfin ces mémoires double ports, vive (11-21) utilisent également une seconde paire (112, 212), de registres de donnée pour permettre l'accès en écriture de données par le processeur principal (1), respectivement secondaire (2). Ce type d'architecture mémoire double ports est disponible chez des fournisseurs tels que Motorola ou Texas Instrument. Les mémoires double ports, synchrones ou asynchrones, permettent d'accéder, par deux voies distinctes, à une zone d'adresse mémoire, en lecture ou en écriture. Elles sont utilisées, en particulier, pour régler des processus de synchronisation entre systèmes distincts. L'utilisation de la mémoire double ports pour synchroniser des processus repose sur le fait que les processeurs peuvent accéder à la mémoire par deux voies indépendantes (adresse et données) de manière synchrone ou asynchrone et partager des données qui peuvent être utilisées simultanément.

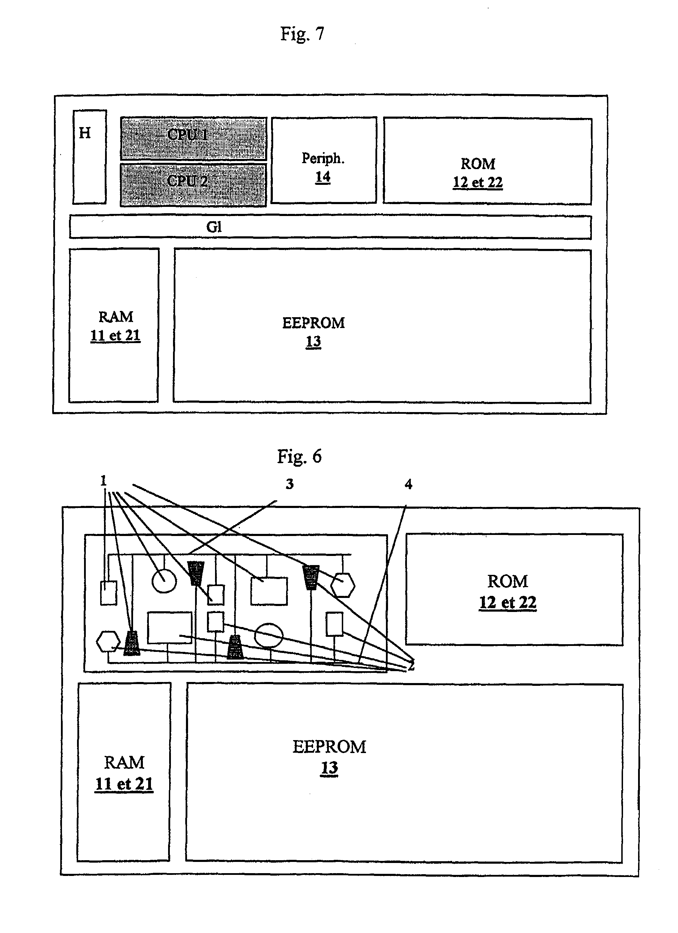

Les deux processeurs (1,2), leur bus (3,4) et leurs mémoires (11,21,12,13,22) sont alimentés par des circuits communs d'alimentation (6) de façon à réduire au maximum la distinction entre les appels énergétiques de l'un ou l'autre processeur. Avec le progrès des technologies du semi-conducteur, il est en effet possible aujourd'hui d'adjoindre sur une même puce deux processeurs qui n'occupent que quelques mm2 et donc d'obtenir une solution économiquement viable, le surcoût du deuxième processeur devenant très faible, surtout si on le compare aux surfaces occupées par les mémoires vives (RAM) et non volatiles programmables (NVM). Il est proposé d'utiliser des outils de placement et de routage qui permettraient de fusionner les processeurs dans un seul et unique bloc de conception (design). Habituellement, l'homme de métier, s'il a à implanter deux processeurs sur un même substrat avec des mémoires vives, mortes et non volatiles programmables, va chercher le regroupement des fonctions ainsi que le chemin optimum et le respect des contraintes de timing. Ceci va l'amener à adopter une architecture et une implantation qui sera très proche de celle représentée à la figure 7, dans laquelle les deux processeurs (CPU1, CPU2) sont implantés à proximité l'un de l'autre, le circuit d'horloge (H) à proximité des processeurs, les circuits périphériques (14) constituant les entrées sorties sont également adjacents des processeurs, ainsi que ce que l'on appelle en terme de métier la "glue" logique G1, qui est un ensemble d'éléments logiques nécessaires au fonctionnement du circuit intégré. Les autres éléments constituant les mémoires vives RAM (11 et 21), morte ROM (12 et 22) et NVM non volatile programmable (13) seront disposés tout autour. Une particularité de l'invention réside dans le fait que les opérateurs logiques, arithmétiques, ainsi que les fonctions de contrôles seraient mélangés, au niveau des portes ou cellules élémentaires, les uns aux autres afin que l'on ne puisse déterminer, a priori, l'emplacement physique d'une cellule appartenant à une fonction. Ainsi chaque processeur serait morcelé en un certain nombre d'éléments représentés par des carrés ou des rectangles sur la figure 6. Ces éléments pourront être implantés au milieu d'autres représentés, par cercles et constituant les circuits d'horloge ou au milieu des éléments hexagonaux constituant la "glue" logique ou encore au milieu des éléments de forme trapézoïdale constituant les circuits périphériques ou enfin au milieu d'une combinaison de ces éléments, comme représenté figure 6. L'implantation physique des circuits des deux processeurs sera avantageusement réalisée en utilisant une telle topologie complètement banalisée sans blocs physiques fonctionnels facilement repérables comme c'est le cas habituellement. Une telle topologie est utilisée dans les circuits "Gate Arrays" dont chaque cellule de la matrice peut contribuer à la réalisation de n'importe quelle fonction. De cette manière, les deux processeurs (1,2) peuvent être physiquement imbriqués, malgré une organisation logique séparée, à tel point que deux transistors adjacents peuvent appartenir soit à l'un, soit à l'autre des processeurs ou de leurs circuits associés. Ceci est rendu possible par le fait que la classe de circuit à laquelle s'adresse le domaine de la carte à microprocesseur n'impose pas des performances élevées en terme de cycle d'horloge. Ce mode d'implantation des circuits est donc particulièrement favorable à assurer la sécurité de l'ensemble. Bien entendu, la réalisation de tels circuits nécessite un tracé automatique assisté par ordinateur pour assurer un routage correct des signaux et une maîtrise des fonctionnalités. On conçoit donc que les consommations de chaque bloc fonctionnel sont parfaitement imbriquées et se combinent complètement.

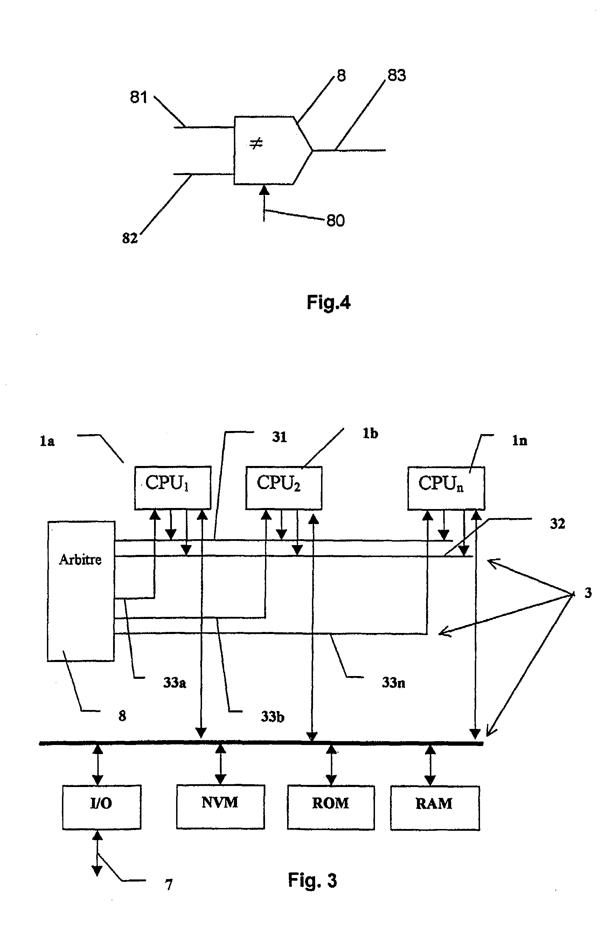

En outre, les deux processeurs peuvent communiquer, soit par l'intermédiaire d'une liaison spécifique, soit par un jeu (50, 51, figure 2a) de registres de communication connectés aux bus (3,4), soit encore par vol de cycle sur le bus de l'autre processeur, soit encore par une logique d'arbitrage, dans le cas d'un bus partagé entre les deux processeurs, comme représenté figure 3.

La figure 2a représente, par exemple, une liaison utilisant deux registres (50,51) fonctionnant en mode interruption à l'aide des circuits de détection (B1,B2), mais on peut aussi utiliser un registre double accès (5) avec un protocole voisin de celui utilisé dans les cartes à puces, c'est-à-dire dans lequel le processeur principal (1) est le maître. Dans l'exemple de réalisation selon la figure 2a, un premier registre (50) assure la liaison entre le bus (3) du processeur principal (1) et celui (4) du processeur secondaire (2), tandis qu'un second registre (51) assure la liaison dans l'autre sens. Chacun des premier (50), respectivement second (51), registres est muni d'une première bascule (B1), respectivement seconde bascule (B2), de mémorisation qui passe à l'état actif lorsqu'une information a été postée dans le registre correspondant. La sortie de la première bascule (B1) est reliée au système d'interruption du processeur secondaire (2), tandis que celle de la seconde bascule (B2) est reliée au système d'interruption du processeur principal (1). La taille des registres est suffisante pour contenir les demandes et les réponses de chacun des processeurs. La figure 2b représente la structure d'une trame avec un entête, un champ de données et un champ permettant de détecter les erreurs. Chaque trame peut constituer soit un bloc d'informations (bloc I), soit un bloc d'acquittement (bloc A), chacun de ces blocs pouvant être transmis dans les deux sens. L'en-tête peut être constitué de deux octets, le premier donnant le numéro du bloc et le deuxième la longueur. Lorsqu'un bloc est posté dans le premier registre (50), la bascule produit un signal qui est interprété comme une interruption IT1 par le processeur secondaire (2), lui permettant ainsi d'être prévenu qu'un message à sa destination est présent dans le premier registre (50). Le processeur secondaire (2) peut donc saisir le bloc en lisant le contenu du premier registre (50), puis acquitter la réception du bloc par un bloc d'acquittement (bloc A) posté dans le second registre (51) à destination du processeur principal (1) avec le même numéro. Ce procédé est connu pour permettre notamment le chaînage des blocs, bien que ceci ne soit pas absolument nécessaire dans le cadre de cette invention. Dans chaque bloc d'informations, le champ d'informations peut être lui-même divisé en deux parties : un champ de commandes et un champ de données. Le champ de commande permet ainsi au processeur principal d'envoyer des instructions au processeur secondaire. Par exemple, on trouvera, sans que la liste soit limitative, les commandes suivantes: lecture, écriture, vérification d'une donnée, authentification. Lorsqu'une commande est reçue par le processeur secondaire (2), ce dernier acquitte la réception de cette commande par un bloc d'acquittement (bloc A) posté dans le second registre (51) et traite la commande en question avant de poster une réponse dans le second registre (51) sous forme d'un bloc d'informations (bloc I). La réception de ce bloc sera acquittée par le processeur principal (1), par un bloc d'acquittement posté dans le premier registre (50) et ainsi de suite. La numérotation des blocs permet de répéter des blocs de données mal transmis ou reçus. Bien entendu, le protocole, pour échanger des informations entre le processeur principal et le processeur secondaire, peut être utilisé en sens inverse.

Les deux programmes (P1, P2) s'exécutent respectivement dans le processeur principal (1 ) et secondaire (2) de telle sorte que deux instructions s'exécutent simultanément. Il est également possible de décaler les phases de l'horloge pilotant le processeur secondaire (2) de façon que les cycles d'instructions ne se correspondent pas exactement dans chacun des processeurs. Les décalages peuvent en outre être rendus variables et aléatoires, ce qui se traduira par des superpositions de cycles d'instructions également variables. Ces décalages peuvent être engendrés par le séquenceur (20) du processeur secondaire (2).

Une solution avantageuse et économique consiste à utiliser une mémoire "trompe-l'oeil" vive (DumRAM 21) de très petite taille pour la mémoire "trompe-l'oeil" du processeur secondaire (2). En effet, cette mémoire ne jouant aucun rôle réellement fonctionnel, on peut restreindre son espace adressable afin qu'elle tienne le minimum de place sur la puce. Cet espace peut correspondre, par exemple, à simplement ajouter une ou plusieurs lignes de mémoire RAM dans la matrice de la mémoire vive ; cet espace ayant ses propres registres d'adresse et de données.

On peut laisser fonctionner le processeur secondaire (2) en permanence, mais il est préférable de disposer d'un canal de communication entre les deux processeurs qui peut être avantageusement utilisé pour activer le processeur secondaire (2) et/ou pour signaler au processeur principal (1) que le processeur secondaire (2) est opérationnel et/ou exécute réellement des tâches. Les processeurs possèdent au moins deux états : actif ou inactif. Par exemple, l'état actif correspond à l'exécution d'une suite d'opérations diverses et l'état inactif peut être réalisé par une boucle d'attente ne contenant aucune opération. Le passage d'un état à l'autre s'effectue par un mécanisme de communication entre les processeurs. Par exemple, le processeur principal peut activer un processeur secondaire inactif en envoyant une interruption à celui-ci. Dans les variantes de réalisation mettant en oeuvre le mécanisme d'activation les processeurs disposent chacun, soit d'une ligne d'interruption à destination d'au moins un autre processeur, soit d'une ligne de reset. En effet une autre façon non préférentielle de réaliser le passage de l'état activé à l'état désactivé peut consister à maintenir un signal de réinitialisation (reset) à destination du processeur qui doit être désactivé et à le supprimer lorsque le processeur passe à l'état activé. Les moyens d'activation sont donc les moyens qui permettent à un processeur de faire passer l'autre de l'état activé à l'état désactivé et inversement.

Ceci peut se faire soit par un mécanisme d'authentification entre les deux processeurs, soit par un mécanisme de test de registre d'activité. Le mécanisme d'authentification est déclenché à la demande du processeur principal (1), ou périodiquement, ou encore aléatoirement. Dès que le processeur principal (1) détecte une anomalie au cours de l'authentification, il peut stopper tout traitement, ou se mettre dans une boucle d'attente.

Pour ce faire, on peut utiliser un fonctionnement de ce type en mode interruption. Lors de l'interruption générée, par exemple, par l'anomalie détectée au niveau du processeur principal (1), un dialogue s'engage entre les deux processeurs pour réaliser une authentification pilotée par le processeur principal (1). Cette authentification consiste, par exemple, à faire chiffrer par le processeur principal (1) une donnée sur la base d'une clé stockée dans une zone secrète d'une mémoire non volatile programmable (13, NVM) connectée au bus (3) du processeur principal (1). La donnée chiffrée est envoyée au processeur secondaire (2) par le canal de communication et ce dernier la déchiffre puis renvoie le résultat au processeur principal (1) qui compare le résultat du déchiffrement à la donnée. Si le résultat est correct, le processeur principal (1) peut continuer à travailler, sinon il entre dans une boucle d'attente en attendant la prochaine authentification. Ces mécanismes sont connus et ne posent pas de problème particulier à l'homme de l'art.

Le processeur principal (1) peut aussi venir tester un registre d'activité dans la mémoire vive "trompe-l'oeil" (DumRAM, 22) du processeur secondaire (2) et constater que ce registre est bien modifié à chaque test. Si ce registre n'est pas modifié, le processeur principal peut suspendre son activité de façon similaire à la précédente.

Dans une variante, il est possible d'utiliser pour programme secondaire (P2), la copie d'une partie quelconque du programme principal (P1) en pointant au départ sur une adresse au hasard et/ou en opérant sur des données différentes de celles du programme principal. On aura ainsi l'assurance que ce programme exécutera des instructions plausibles mais inutiles au plan fonctionnel.

On peut également faire exécuter au processeur secondaire (2) un programme corrélé à celui qui est exécuté par le processeur principal de façon telle que les résultats intermédiaires de traitement n'apparaissent jamais au cours de l'exécution. Supposons, par exemple, que l'on veuille dissimuler le résultat d'une opération F en faisant exécuter respectivement par chacun des processeurs deux fonctions f1 et f2 différentes de F mais choisies de telle sorte que le résultat de F puisse être obtenu par une fonction g combinant ces deux fonctions différentes de telle façon que F = g (f1,f2).

Pour éviter l'introduction d'erreurs dans le code et/ou les données de la carte et permettre également d'effectuer des attaques contre la carte à puce (differential fault analysis, DFA) il est proposé d'implanter des programmes « intolérants aux fautes ». Cette introduction d'erreurs se fait notamment par des modifications instantanées de l'alimentation et/ou de l'horloge (power/clock glitch). Dans l'exemple ci-dessous (un programme de communication hypothétique), l'attaquant chercherait à modifier le comportement du branchement conditionnel (ligne 3) ou du décrément (ligne 6) afin de recevoir des données au-delà de la zone mémoire normalement prévue

| (answer_address + answer_length) : | |
|---|---|
| 1 | b = answer_address |
| 2 | a = answer_length |
| 3 | if (a == 0) goto 8 |
| 4 | transmit (*b) |
| 5 | b = b + 1 |
| 6 | a = a - 1 |
| 7 | goto 3 |
| 8 | ... |

Ces programmes « intolérants aux fautes » (c'est-à-dire capables de détecter des fautes) pour cartes à puce, ont par définition des tâches redondantes qui sont exécutées sur les processeurs (CPU) d'une carte multiprocesseur.

A certains points de "synchronisation" réalisés par un "verrou" matériel ou logiciel, tel qu'un compteur physique ou logique décrémenté, ainsi qu'une instruction atomique de type transfert ("swap", "read-modify-write", connues par l'état de l'art), l'accord des tâches redondantes sur l'exécution du programme est vérifié par le ou les processus principaux.

Un désaccord est considéré par le processeur ayant procédé à la vérification comme signe d'une attaque. L'introduction par un fraudeur d'erreurs dans le code de la carte devient alors beaucoup plus complexe du fait de ces vérifications. Dans l'exemple ci-dessus, l'attaquant devrait parvenir à modifier le comportement de deux (ou plusieurs) tâches de façon identique, ce qui paraît pratiquement impossible (impracticable).

En pratique, on cherchera à sécuriser l'intégrité des données "critiques" du programme. Pour les variables, cette sécurisation peut se faire par duplication en mémoire. Chaque processeur (CPU) possède alors ses propres copies des variables en question qui sont stockées dans une mémoire réellement fonctionnelle et non pas de type trompe-l'oeil. Dans notre exemple hypothétique, le décrément de la variable "a" (compteur de boucle) peut être protégée par la séquence d'instructions ci-dessous qui est exécutée par chacun des processeurs :

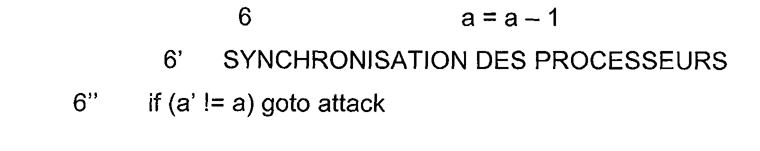

Où "a' " est une copie de la variable "a" utilisée par le deuxième processeur et dans le cas où "a" est différent de "a' " le programme se branche sur la routine de traitement dénommée "attack" qui prend les mesures nécessaires pour protéger la carte.

Par exemple, suite à la détection d'une attaque, il y a branchement à l'étiquette (label) "attack" et la routine de traitement "attack" exécutera les opérations adéquates, telles que la réinitialisation (Reset) des microprocesseurs et/ou l'effacement des clés en mémoire non volatile programmable, par exemple du type E²PROM.

On notera qu'il est également possible de sécuriser directement le contrôle de flux, c'est-à-dire le déroulement du programme. La donnée critique sécurisée est alors le compteur ordinal des processeurs (ou une autre information liée au compteur ordinal si les processeurs n'exécutent pas le même code). Après chaque branchement (conditionnel ou inconditionnel) que l'on veut sécuriser, il faut que les tâches redondantes comparent l'information sur la direction que les branchements respectifs ont pris. Dans l'exemple hypothétique donné ci-dessus, le branchement conditionnel en ligne 3 peut alors être sécurisé par échange et comparaison du compteur ordinal ou de l'information correspondante en lignes 4 et 8.

Les opérations d'échange et de comparaison peuvent être réalisées, soit en logiciel (de façon similaire à la séquence d'instructions 6 - 6" décrite ci-dessus), soit en matériel par un comparateur (8) tel que celui de la figure 4 qui est actionné par un signal résultant de l'opération de synchronisation et délivré sur son entrée de validation (80). Le comparateur (8) reçoit également sur ses autres entrées (81, 82) les signaux représentatifs des valeurs des compteurs ordinaux (PC, PC') respectifs à chaque processeur principal (1) et secondaire (2).

En cas d'attaque, le comparateur matériel (8) déclenchera par le signal (attack interrupt) émis sur sa sortie (83), le traitement d'une interruption effectuant alors les opérations adéquates au travers du mécanisme d'interruption des microprocesseurs (exemple: Reset interrupt).

On pourrait être tenté de dire que ces mécanismes s'apparentent à l'exécution classique de programmes dans un système à deux processeurs, mais les mécanismes de l'invention sont très différents:
* Les deux processeurs sont alimentés par les mêmes circuits, de façon à mélanger les différentes consommations instantanées des deux processeurs et de leurs circuits associés. Ils peuvent être situés sur le même substrat de silicium.
* Les signatures des instructions utilisées dans le processeur secondaire sont de nature à dissimuler l'effet des signatures des instructions exécutées dans le processeur principal.
* Le but du programme secondaire est d'exécuter des fonctions différentes du programme principal mais qui occultent celles de ce programme principal. On peut ainsi considérer un processus secondaire exécutant des tâches sans aucune corrélation avec le programme principal, voire même incohérentes ou, au contraire, faire réaliser des tâches parallèles au processus principal qui sont corrélées à ces dernières dans le but de les dissimuler.
* La taille de la mémoire vive "trompe-l'oeil" peut souvent être beaucoup plus petite que celle nécessaire au déroulement normal d'un programme.
* Le processeur principal n'exécute un programme sensible au sens de la sécurité que si le processeur secondaire est authentifié et/ou s'il est actif.
* Le contenu de la mémoire vive "trompe-l'oeil" n'a pas d'importance fonctionnelle car elle ne sert qu'à brouiller les pistes dans la consommation énergétique de l'ensemble des mémoires.
* Il n'est pas nécessaire de sauver et de restaurer les contextes des programmes secondaires.

Dans une autre variante de réalisation, le processeur principal (1) active un compteur de temps (timer) (R3) initialisé soit à l'aide du générateur aléatoire (R1), soit à partir du contenu de la mémoire non volatile programmable (13, NVM). Cette mémoire non volatile programmable (13) peut en effet contenir un nombre unique modifié à chaque utilisation. Quand le compteur de temps (R3) arrive à échéance au bout d'un temps imprévisible de l'extérieur, il déclenche une authentification du processeur secondaire (2) par le processeur principal (1).

Dans une autre variante de réalisation le registre (R2) peut, après avoir été chargé par des informations particulières (par exemple venant d'une mémoire ou du générateur aléatoire (R1)), être utilisé pour déclencher une interruption.

Dans une autre variante de réalisation, un générateur aléatoire (R1) est relié au système d'interruption (15) du microprocesseur principal (1) de façon à engendrer des interruptions irrégulières et complètement désynchronisées par rapport à l'exécution des programmes dans le processeur principal (1). Bien entendu, le système d'interruption peut être masquable ou non en fonction du traitement considéré. Dans ce cas, si l'interruption est masquée, le fonctionnement de l'ensemble est classique en monoprocesseur, mais dès que le programme principal (P1) en cours veut se protéger contre d'éventuelles observations, il autorise cette interruption qui déclenche l'authentification et l'activation du processeur secondaire (2).

Dans une autre variante de réalisation à bus commun partagé entre au moins deux processeurs, par exemple n, chaque processeur (1a, 1b,...,1n, fig.3) est relié à une logique d'arbitrage centralisée (8) par trois types de lignes, un premier requête de bus (31) (Bus Request), un second bus occupé (32) (Bus Busy) et un troisième scrutation de bus (33) (Bus Polling) du bus commun (3). Les deux premiers types, requête (31) et occupé (32) sont constitués respectivement d'une seule ligne commune à tous les processeurs, tandis que le dernier type, scrutation (33) est une ligne individuelle (33a,33b,...,33n) à chacun des n processeurs (1a, 1b,...,1n). L'ensemble des processeurs se partagent au travers du bus unique (3) la mémoires vive (RAM), la mémoire morte (ROM), la mémoire non volatile programmable (NVM) et le circuit d'entrée sortie (I/O).

Un processeur (par exemple, 1a) souhaitant acquérir le bus (3) indique ce souhait sur la ligne de requête de bus (31). L'arbitre (8) interroge les autres processeurs (1b,...,1n) d'après un algorithme bien déterminé (exemple : interrogation cyclique, scrutation de bus) sur les lignes de type scrutation (33b,...,33n) correspondant aux processeurs interrogés. Le premier processeur interrogé qui en avait fait la demande acquiert le bus et active la ligne bus occupé (32) (Bus Busy). L'arbitre (8) ne reprend l'interrogation qu'une fois le bus (3) libéré par le passage du signal transmis sur la ligne bus occupé (32) de l'état actif à l'état inactif. On comprend donc que les processeurs sont connectés sur un seul et même bus, dont ils se partagent les accès en multiplexant ces accès dans le temps.

Bien entendu, il est possible de combiner les effets des modes de réalisation précédents et il n'est pas nécessaire que le brouillage soit réalisé de façon continue.

Ainsi, lorsque le programme principal (P1) exécute des fonctions non sensibles sur le plan sécuritaire, le brouillage réalisé par l'invention peut être rendu intermittent en ayant recours de façon intermittente au fonctionnement monoprocesseur, par exemple, pour délivrer des résultats au monde extérieur, à des fins de test, ou encore masquer les interruptions du compteur de temps (R3) ou du générateur aléatoire. Dès qu'une fonction sécuritaire est mise en oeuvre, le programme principal (P1) autorise le fonctionnement du processeur secondaire (2) afin de "brouiller" le fonctionnement.

En fait, la sécurité ne provient plus du fait que le processeur est cadencé aléatoirement comme dans l'art antérieur, mais se situe au niveau de l'exécution simultanée de deux programmes (P1,P2) de signatures différentes par deux processeurs (1,2) alimentés par les mêmes sources d'énergie.

L'organisation des programmes exécutés par le processeur principal (1) peut être réalisée de telle manière que le fonctionnement du processeur principal soit piloté par un véritable système d'exploitation sécuritaire qui décide du type de brouillage à mettre en oeuvre en fonction du type de programme exécuté par la machine. Dans ce cas, c'est le système d'exploitation du processeur principal (1) qui gère comme bon lui semble les divers signaux de commande du processeur secondaire (2). Il est également clair que le programme secondaire (P2) peut être utilisé pour réaliser des fonctions utiles au programme principal (P1), notamment des traitements qui peuvent accélérer le temps de traitement global. Ces traitements peuvent être constitués, par exemple, par des préparations de calculs effectués par le programme secondaire mais utilisés ultérieurement par le programme principal (P1). Bien entendu, on peut facilement généraliser les mécanismes de l'invention lorsque le processeur fonctionne en multiprogrammation, les programmes d'application pouvant alors être considérés comme autant de programmes principaux.

Le générateur aléatoire et le compteur de temps vus plus haut ne posent pas de problèmes particuliers de réalisation et sont connus de l'homme de l'art lorsqu'ils sont utilisés séparément pour d'autres usages n'ayant aucun lien avec l'invention.

Dans une autre variante il est possible de réaliser l'invention de telle sorte que les deux processeurs puissent alternativement jouer le rôle de processeur principal et de processeur secondaire. Cela suppose qu'un jeton de priorité soit échangé entre les deux processeurs pour conférer à celui des deux qui le détient le rôle de maître à un instant donné.

D'autres modifications font également partie de l'esprit de l'invention. Les variantes décrites avec un mode de réalisation limité à deux processeurs peuvent également s'appliquer à des modes de réalisation à plusieurs processeurs et font partie de l'invention. Ainsi, à tout moment dans la description le terme mémoire morte doit être compris comme étant une ROM mais peut être remplacé par une PROM, EPROM, EEPROM ou encore tout autre type de mémoire non volatile programmable, morte ou vive.

## Revendications

1. Circuit intégré intelligent, possédant un processeur principal (1) et un système d'exploitation exécutant un programme principal (P1) pour constituer un processus principal réalisant des tâches, au moins un processeur secondaire (2) capable d'exécuter concurremment au moins un programme secondaire (P2) pour constituer au moins un processus réalisant des tâches, **caractérisé en ce qu'**il comprend un système intolérant aux fautes permettant de s'assurer que le processus principal ne subit pas d'attaque venant de l'extérieur, des circuits d'alimentation (6) communs entre les processeurs et des moyens pouvant être activés par le système intolérant aux fautes et permettant de s'assurer que le ou les processus secondaires d'énergie similaire et de signature de fonctionnement différente, s'effectuent concurremment avec le processus principal en induisant dans les circuits d'alimentation, de façon continue ou intermittente, des perturbations énergétiques, liées aux tâches exécutées par le ou les processus secondaires, qui se superposent à la consommation énergétique engendrée par l'exécution des tâches du processus principal pour réaliser un brouillage continu ou intermittent du séquencement du processus principal.

2. Circuit intégré intelligent selon la revendication 1, **caractérisé en ce que** les processeurs principaux ou secondaires sont chacun un microprocesseur ou microcalculateur sécurisé.

3. Circuit intégré intelligent selon la revendication 1 ou 2, **caractérisé en ce que** l'activation de ces moyens est déclenchée par le système intolérant aux fautes géré par le système d'exploitation du processeur principal (1) du circuit intégré intelligent, de telle sorte que la sécurité supplémentaire créée par les moyens ci-dessus ne dépend que d'une décision résultant de l'exécution par le processeur principal du système d'exploitation situé dans un endroit du circuit intégré inaccessible de l'extérieur.

4. Circuit intégré intelligent selon la revendication 1 ou 2, **caractérisé en ce qu'**il possède une mémoire principale (12, 13), dédiée au processeur principal (1), contenant le système d'exploitation dans au moins une partie de celle-ci inaccessible de l'extérieur et accessible par au moins un des deux processeurs (1, 2) et une mémoire secondaire (21, 22) respectivement dédiée au processeur secondaire (2).

5. Circuit intégré intelligent selon une des revendications 1 à 4, **caractérisé en ce qu'**il possède au moins un bus (3, 4) de communication entre les processeurs, leurs mémoires respectives et un circuit d'entrée sortie.

6. Circuit intégré intelligent selon une des revendications 1 à 5, **caractérisé en ce qu'**il est réalisé à l'aide de circuits logiques dispersés sur le ou les substrats de façon que l'implantation physique des deux processeurs soit réalisée sans blocs fonctionnels facilement repérables, par exemple par imbrication physique mais avec une organisation logique séparée.

7. Circuit intégré intelligent selon une des revendications 1 à 6, **caractérisé en ce que** le processeur secondaire (2) exécute des tâches du processus secondaire qui minimisent ou annulent les signatures de fonctionnement du processeur principal (1).

8. Circuit intégré intelligent selon une des revendications 1 à 7, **caractérisé en ce que** le processeur secondaire (2) exécute des tâches du processus secondaire corrélées à celles du processus principal exécuté par le processeur principal (1) de façon telle que les résultats intermédiaires de traitement n'apparaissent jamais au cours du processus.

9. Circuit intégré intelligent selon une des revendications 1 à 8, **caractérisé en ce que** le programme secondaire (P2) utilise un espace de travail plus petit que celui du programme principal (P1).

10. Circuit intégré intelligent selon une des revendications 1 à 9, **caractérisé en ce qu'**il possède des moyens de communication entre le processeur principal (1) et le processeur secondaire (2).

11. Circuit intégré intelligent selon la revendication 10, **caractérisé en ce que** les moyens de communication (50, 51, B1, B2) entre les deux processeurs permettent au processeur principal (1) de savoir si le processeur secondaire (2) est opérationnel ou non.

12. Circuit intégré intelligent selon la revendication 10 ou 11, **caractérisé en ce que** les moyens de communication entre les deux processeurs permettent au processeur principal (1) de réaliser une authentification du processeur secondaire (2).

13. Circuit intégré intelligent selon la revendication 11 ou 12, **caractérisé en ce que** le test d'authentification ou de fonctionnement du processeur secondaire (2) est réalisé en cours de traitement par le processeur principal (1).

14. Circuit intégré intelligent selon une des revendications 1 à 13, **caractérisé en ce qu'**un test de détection d'attaque du processeur principal (1) est réalisé en cours de traitement par le système intolérant aux fautes du processeur principal (1), qui lance une routine de traitement d'attaque si le test de détection d'attaque est positif.

15. Circuit intégré intelligent selon une des revendications 1 à 13, **caractérisé en ce que** le test de détection d'attaque est réalisé par le système d'intolérance aux fautes par synchronisation des processus et comparaison de valeurs de deux données provenant chacune du processeur respectif exécutant son programme respectif.

16. Circuit intégré intelligent selon une des revendications 1 à 15, **caractérisé en ce que** l'activation du processeur secondaire (2) est commandée soit par le processeur principal (1) et son programme principal (P1) contrôlant la routine de traitement d'attaque, soit par un système d'interruption (15), soit par un compteur de temps (R3), soit encore par une combinaison des trois

17. Circuit intégré intelligent selon une des revendications 1 à 16, caractérisé en qu'il comporte une interface entrée/sortie reliée à au moins un bus du circuit intégré, cette inferface étant du type soit parallèle/parallèle soit parallèle/série.

18. Circuit intégré intelligent selon une des revendications 1 à 17, **caractérisé en ce qu'**il comporte au moins une mémoire double port, synchrone ou asynchrone pour partager les données accessibles simultanément par les deux processeurs.

19. Circuit intégré selon une des revendications 1 à 18, **caractérisé en ce qu'**il comporte un canal de communication entre les deux processeurs et, utilisé pour activer le processeur secondaire et/ou pour signaler au processeur principal que le processeur secondaire est opérationnel ou exécute des tâches.

20. Circuit intégré intelligent selon une des revendications 1 à 7 ou 9 à 19, **caractérisé en ce que** le processeur secondaire (2) exécute des tâches du processus secondaire sans corrélation avec celles du processus principal exécutées par le processeur principal (1).

21. Circuit intégré intelligent selon une des revendications 1 à 19, **caractérisé en ce que** le programme secondaire (P2) met en oeuvre un processus corrélé au processus principal, de telle façon que la combinaison des deux processus fournisse une signature de fonctionnement du processeur secondaire (2) qui dissimule celle du processeur principal (1).

22. Circuit intégré intelligent selon une des revendications 1 à 19 ou 21, **caractérisé en ce que** le processeur secondaire (2) exécute des tâches corrélées à celles du processeur principal (1) de façon telle que les résultats intermédiaires de traitement n'apparaissent jamais au cours du processus.

23. Circuit intégré intelligent selon une des revendications 1 à 22, **caractérisé en ce que** le processeur secondaire (2) peut se substituer au processeur principal (1) et réciproquement.

24. Circuit intégré intelligent selon une des revendications 1 à 19 ou 21 à 23, **caractérisé en ce que** le processeur secondaire (2) exécute des tâches corrélées à celles du processeur principal (1) par synchronisation des processus et comparaison de valeurs de deux données provenant chacune du processeur respectif exécutant son programme respectif.

25. Circuit intégré intelligent selon une des revendications 1 à 19 ou 21 à 24, **caractérisé en ce que** le processeur secondaire (2) exécute des tâches corrélées à celles du processeur principal (1) par déduction logique du programme secondaire (P2) à partir du programme principal (P1).

26. Circuit intégré intelligent selon une des revendications 1 à 25, **caractérisé en ce qu'**il comporte au moins deux processeurs et chacun des processeurs (1, 2) possède un bus respectif (3, 4) auxquels sont reliées les mémoires vives, mortes pour chaque processeur et non volatile pour le processeur principal.

27. Circuit intégré intelligent selon une des revendications 1 à 26, **caractérisé en ce qu'**il comporte une pluralité de processeurs dont chacun est relié à un seul et même bus de communication multiplexé entre les processeurs et un ensemble de mémoire vive, morte et non volatile relié à ce bus, les conflits d'accès à ce bus commun étant gérés par un circuit d'arbitrage (8).

28. Circuit intégré intelligent selon une des revendications 8, 20, 22, 24 ou 25, **caractérisé en ce que** le processeur secondaire (2) exécute successivement et dans n'importe quel ordre, soit des programmes corrélés, soit des programmes sans corrélation avec ceux exécutés par le processeur principal (1).
